## Europäisches Patentamt
## European Patent Office
## Office européen des brevets

(19)

(11) Numéro de publication: **0 077 712 B1**

(12) **FASCICULE DE BREVET EUROPEEN**

(45) Date de publication du fascicule du brevet:
12.03.86

(51) Int. Cl.⁴: **H 04 N 7/00**

(21) Numéro de dépôt: **82401847.7**

(22) Date de dépôt: **08.10.82**

(54) **Système de diffusion de données par paquets.**

(30) Priorité: **15.10.81 FR 8119789**

(43) Date de publication de la demande:
**27.04.83 Bulletin 83/17**

(45) Mention de la délivrance du brevet:
**12.03.86 Bulletin 86/11**

(84) Etats contractants désignés:
**AT BE CH DE GB IT LI LU NL SE**

(56) Documents cités:
**EP - A - 0 005 317**
**FR - A - 2 313 825**
**GB - A - 2 066 024**
**US - A - 3 760 371**
**US - A - 3 781 818**
**US - A - 4 082 922**

**IEEE TRANSACTIONS ON CONSUMER ELECTRONICS,**
vol. CE-26, no. 3, août 1980, pages 578-585, New York
(USA); J.R. STOREY et al.: "A description of the
broadcast telidon system".
**CONTROL ENGINEERING,** vol. 27, no. 9, septembre
1980, pages 129-132, St Pontiac, Illinois (USA);
McGOWAN: "Process bus protocol orchestrates
distributed or centralized control".
**VIDEOTEX, VIEWDATA & TELETEXT, A TRANSCRIPT OF**

(73) Titulaire: **Etablissement Public de Diffusion dit
"Télédiffusion de France", 21-27 rue Barbès,
F-92120 Montrouge (FR)**

(72) Inventeur: **Noirel, Yves Maurice, Le Chesnot-Bréteil,
F-35160 Montfort (FR)**
Inventeur: **Vardo, Jean-Claude, 35, rue de la Fougerolle,
F-35760 Montgermont (FR)**

(74) Mandataire: **Le Guen, Louis François, Cabinet Louis Le
Guen 1, avenue Edouard VII B.P. 91, F-35802 Dinard
Cédex (FR)**

(56) Documents cités: (suite)
**THE ONLINE CONFERENCE ON VIDEOTEX; VIEWDATA
AND TELETEXT,** On Line Publications 1980, pages
359-370, Northwood Hills (GB); B. MARTI: "Broadcast
text information in France".
**ELECTRONIQUE,** no. 272, septembre 1979, pages 29-34,
Paris (FR); M. ASTIER et al.: "Interface de
téléacquisitions et de télécommandes industrielles sur
deux fils".

## Description

La présente invention concerne un système de diffusion de données du type du système DIDON actuellement utilisé par la demanderesse pour diffuser, par exemple, le service de télétexte ANTIOPE.

Le système de transmission DIDON est décrit notamment dans le brevet français 75 18319 déposé le 6 juin 1975 et publié sous le N° 2 313 825, dans son 1er certificat d'addition 77 17625 déposé le 3 juin 1977 et publié sous le N° 2 393 480, dans la demande de 2e certificat d'addition 79 24570 déposée le 27 septembre 1979, dans la demande de 3e certificat d'addition 81 10089 déposée le 14 mai 1981, et également dans le brevet français 77 29412 du 26 septembre 1977 publié sous le N° 2 404 350.

Dans le système de transmission unidirectionnel ou de télédiffusion de données du brevet principal, du 1er certificat d'addition et de la demande de 2e certificat d'addition mentionnés ci-dessus, les données transmises sont arrangées en paquets, chaque paquet ayant, au maximum, la durée active d'une ligne d'image de télévision. Les paquets sont insérés, soit à la place des signaux d'image, soit dans des lignes de retour en trame, entre les signaux de synchronisation classiques des lignes de télévision.

Chaque paquet diffusé commence par un préfixe contenant, outre des signaux de synchronisation d'éléments binaires et d'octets classiques et des signaux de code d'identification de voie, un signal de format de paquet indiquant la longueur de la suite de données qui suit le préfixe. Plus précisément, dans le paquet, les données utiles et les données qui composent le préfixe sont groupées en octets. Donc, le signal de format est un octet qui indique, pour chaque paquet, le nombre d'octets de données utiles qui suit le préfixe.

Jusqu'ici dans le système DIDON, la transparence du système de diffusion de données, vis à vis des informations numériques transmises, était assurée au niveau des paquets par l'utilisation de l'octet de format qui permettait, d'une part, la régulation de débit des informations et, d'autre part, l'adaptation du système DIDON à la norme de télévision.

Plutôt que d'assurer la transparence du système de diffusion de données au niveau paquet, qui est un niveau d'épendant des caractéristiques électriques du support de transmission, il est proposé, suivant la présente invention, d'assurer cette transparence au niveau d'une nouvelle entité d'informations appelée «groupe de données». Ce niveau groupe est choisi indépendant des caractéristiques du support de transmission, ce qui permet de manipuler des entités (les groupes) de taille variable, et de réaliser des fonctions telles que:

— le multiplexage, dans la même voie numérique, d'informations de natures différentes, mais destinées à être utilisées conjointement de façon à pouvoir tailler sur mesure les caractéristiques de la transmission au niveau transport: par exemple, certains groupes de données transportant des informations sensibles aux erreurs de transmission sont répétées systématiquement, éventuellement un certain nombre de fois;

— le multiplexage, dans la même voie numérique, de groupes de natures différentes, ce qui permet leurs aiguillages, au niveau du récepteur de données, vers des organes de traitements spécialisés;

— l'utilisation de groupes de données spécialisés permettant la mise en place, au niveau transport, de procédés de chiffrement des informations utiles afin d'en réserver l'usage à une catégorie d'abonnés.

En ce qui concerne les informations répétées, on connaît le système de transmission décrit dans l'article de McGowan paru dans la revue technique «Control Engineering», vol. 27, n° 9, septembre 1980, pp. 129–132 et intitulé «Process bus protocol orchestrates distributed or centralized control», ou encore l'article de M. Astier et al. dans la revue technique «Electronique», n° 272, septembre 1979, pp. 29–34 et intitulé «Interface de téléacquisitions et de télécommandes industrielles sur deux fils». Dans ces systèmes connus, le nombre de répétitions est fixe ou connu à l'avance, ce qui constitue un handicap. C'est pourquoi un objet de l'invention consiste à prévoir un système capable de transmettre chaque groupe avec un taux individuel de répétitions, ce qui offre une grande souplesse d'emploi.

Conformément à l'invention, les objets mentionnés ci-dessus sont atteints par la mise en œuvre du système défini dans la partie caractérisante de la revendication principale complétée par les revendications dépendantes.

Les caractéristiques de la présente invention apparaîtront plus clairement à la lecture de la description suivante d'un exemple de réalisation, ladite description étant faite en relation avec les dessins joints, parmi lesquels:

la Fig. 1 représente le bloc-diagramme d'un système de diffusion de données du type DIDON,

la Fig. 2 est un bloc-diagramme de l'équipement d'émission, suivant l'invention, utilisé dans le système de la Fig. 1,

la Fig. 3 est un bloc-diagramme de la partie logique du sous-ensemble de traitement des groupes de données de l'équipement de la Fig. 2.

la Fig. 4 représente le bloc-diagramme de la partie logique du sous-ensemble de génération des paquets de données de l'équipement de la Fig. 2,

la Fig. 5 est le bloc-diagramme d'un équipement de réception suivant l'invention,

la Fig. 6 est un bloc-diagramme de la partie logique du sous-ensemble de traitement des paquets de données de l'équipement de la Fig. 5, et

la Fig. 7 est un bloc-diagramme de la partie logique du sous-ensemble de traitement des groupes de données de l'équipement de la Fig. 5.

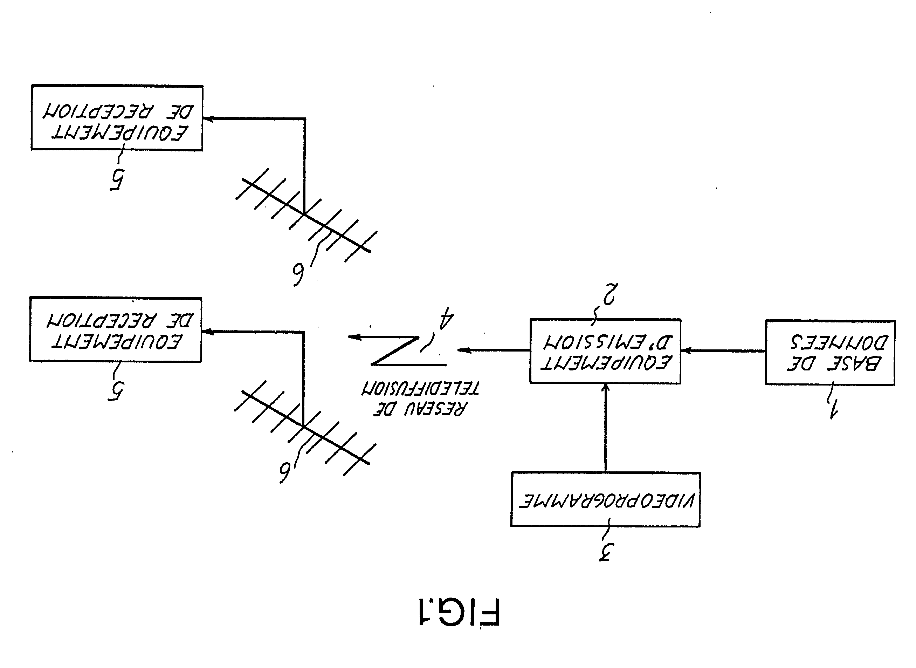

Dans l'exemple d'application décrit ci-après, on considérera plus particulièrement le cas de la diffusion d'un fichier de données par l'intermédiaire du système DIDON. Le système de diffusion de fichiers, représenté sur la Fig. 1 comprend une base de données 1, un équipement d'émission 2 du type DIDON et capable de transmettre également des programmes de télévision à partir d'une source 3, le réseau de télédiffusion herzienne 4, ainsi qu'une pluralité de récepteurs de données 5 comportant chacun une antenne de réception 6, un sous-ensemble de démodulation 7 des signaux de télévision, un dispositiv d'acquisition de données 8 et un périphérique de dialogue 9.

Le but assigné à l'équipement d'émission 2 est d'adapter la présentation des informations, fournies par la base de données, au réseau DIDON qui est chargé de les transmettre. Deux autres tâches sont assignées à l'équipement d'émission 2:

— la génération des informations dites de messagerie d'accès permettant le chiffrement des données au niveau transport,

— la génération des informations d'heure et de date en temps réel permettant la resynchronisation des horloges des récepteurs de données 5.

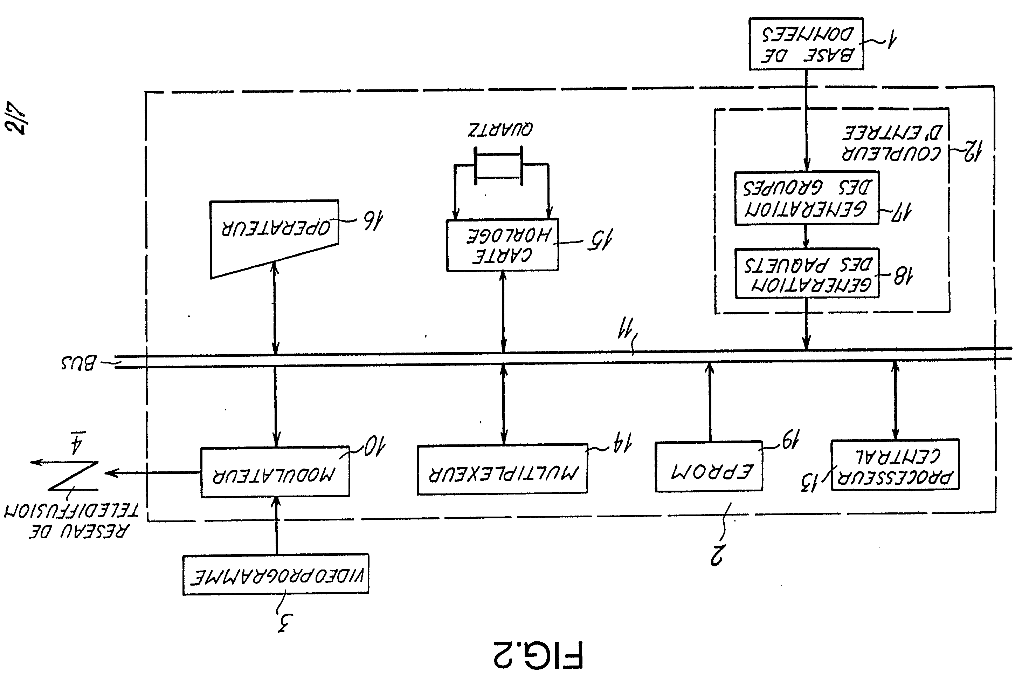

L'équipement d'émission 2, illustré par la Fig. 2, est un nœud de communication dont l'entrée reçoit les signaux de sortie d'une source de données quelconque, telle que la base de données 1, et dont la sortie applique, par l'intermédiaire d'un modulateur 10, des signaux de sortie à un réseau hôte, tel que le réseau de télédiffusion 4, lequel diffuse les données sous la norme DIDON modifiée suivant la présente invention. Le modulateur 10 peut aussi recevoir des signaux vidèo de la source 3.

Les organes constituant l'équipement d'émission sont reliés entre eux par un bus normalisé BUS 11 et comprennent une pluralité d'interfaces appelés coupleurs d'entrée 12, un processeur central 13, un multiplexeur 14, le modulateur 10, une horloge numérique 15, un opérateur 16 et une mémoire de programme 19. Dans l'exemple d'application décrit, on a supposé que l'équipement d'émission 2 n'est équipé que d'un seul coupleur 12 le reliant à la base de données 1.

Au niveau de ce coupleur d'entrée spécialisé s'effectuent la gestion des entités d'informations appelées «groupes de données», qui comprennent les groupes horodate, de messagerie d'accès et de fichiers définis ci-dessus, ainsi que le traitement des données au niveau réseau DIDON. La structure et le fonctionnement du coupleur d'entrée 12 seront décrits en détail dans la suite. Il faut savoir que les échanges entre le coupleur d'entrée 12 et le multiplexeur 14 se font paquet par paquet.

Le precesseur central 13 assure la liaison avec l'opérateur 16, procède à la scrutation des coupleurs d'entrée 12, lorsqu'il y en plusieurs, et informe le multiplexeur 14 des endroits où se trouvent les paquets à expédier. Enfin le processeur central 13 assure la synchronisation de l'ensemble du système lors de l'initialisation générale.

Le multiplexeur 14 est chargé de recueillir les paquets d'informations formés dans les coupleurs 12 en vue de leur émission. Il s'agit donc d'un organe non intelligent constitué simplement d'une mémoire organisée en pages, une page renfermant un paquet DIDON, d'un système d'accès direct à la mémoire des coupleurs et d'un dispositif de gestion de la fenêtre d'émission, c'est à dire des lignes de télévision réservées à la diffusion de données.

Le modulateur 10 met en forme les données et les insère dans le signal vidéo sur les lignes correspondant à la fenêtre d'émission.

L'horloge 15, réalisée sur une carte dite carte horloge, engendre des informations d'heure et de date de temps réel et les groupes de données correspondants sont engendrés par le processeur central 14.

L'opérateur 16 permet la configuration de l'équipement d'émission 2 (sa mise en route, son initialisation générale, la synchronisation de l'heure et de la date, etc.).

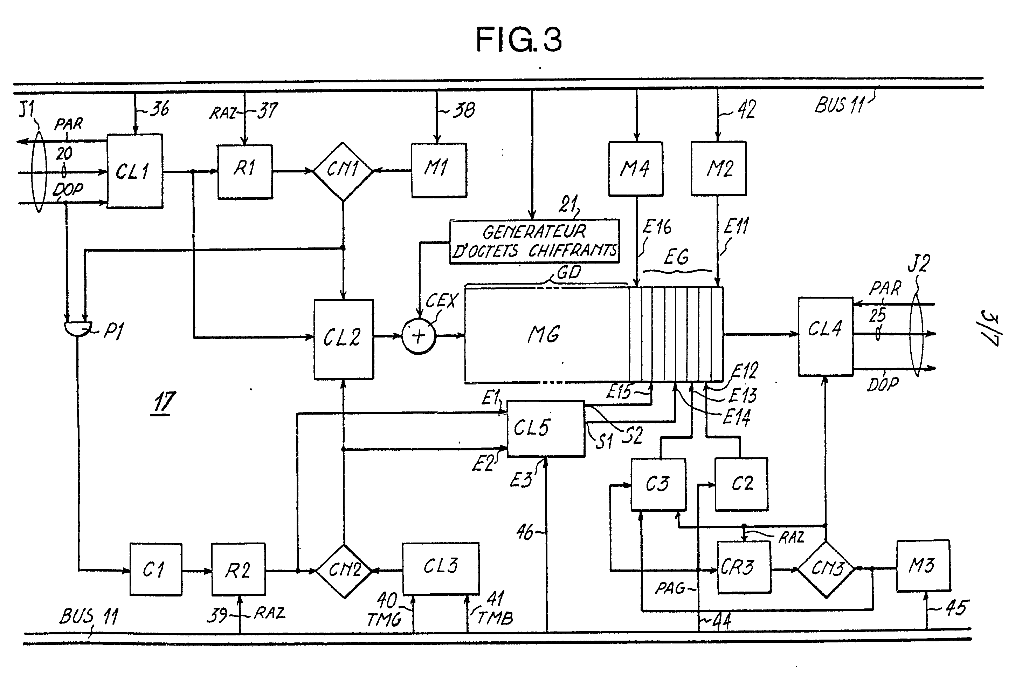

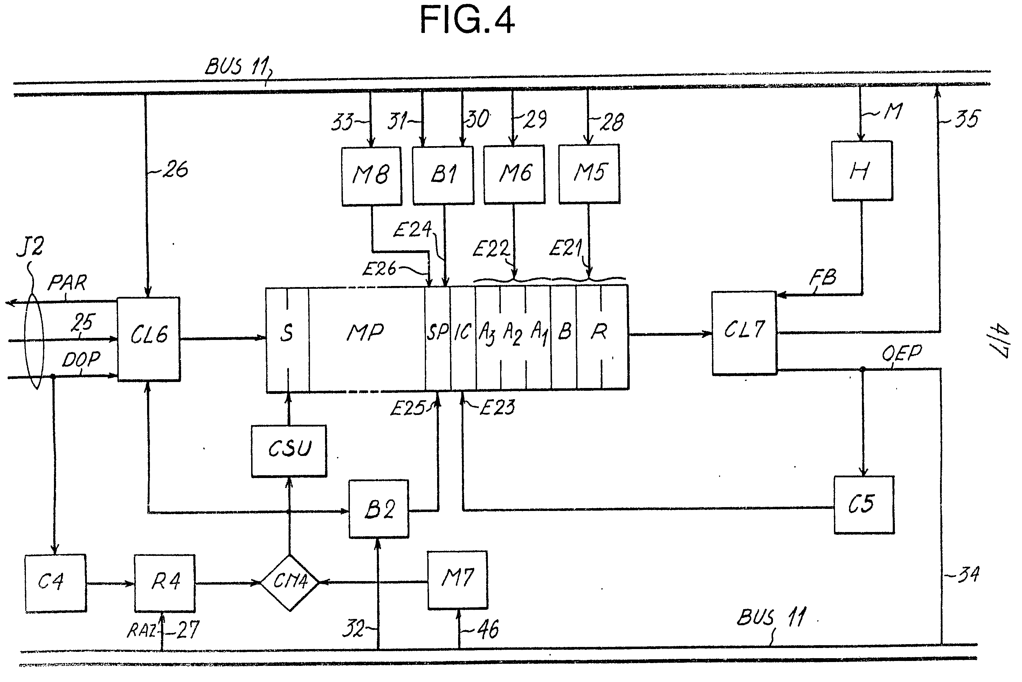

Suivant l'invention, le champ d'informations utiles provenant de la source de données 1 est découpé en un certain nombre d'entités de base appelées «groupes de données». A leur tour, les groupes de données sont découpées en entités de base plus petites appelées «blocs de données». Chaque bloc de données ainsi formé est inséré dans un paquet de données en vue de sa transmission sur le réseau DIDON. Le coupleur d'entrée 12 comprend donc deux parties fonctionnelles: un générateur de groupes de données 17, représenté à la Fig. 3, et un générateur de paquets de données 18 représenté à la Fig. 4.

Dans le générateur de groupes de données 17, les données provenent de la source 1 sont transmises par une jonction J1 du type de celle décrite dans le brevet français 2 268 308 intitulé «Dispositif d'interface normalisé de communications». La jonction J1 comprend huit fils 20 qui transmettent les informations par octets en parallèle, un fil DOP dont le niveau commandé par la source 1 indique si des données sont présentes ou non, et un fil PAR dont la niveau commandé par le coupleur 12 indique s'il est prêt ou non à recevoir les données. La jonction J1 est reliée à l'entrée d'un circuit logique CL1 dont la sortie est reliée, d'une part, à un second circuit logique CL2 et, d'autre part, à un registre d'octets R1. Le circuit CL1 a une entrée de commande reliée au BUS par une liaison 36 qui sert à transmettre un ordre de marche/arrêt issu de l'opérateur 16. Le fil DOP, qui transmet un changement d'état pour chaque octet transmis par la source 1, est relié à une entrée d'une porte ET P1 dont la sortie est reliée à l'entrée d'un compteur C1. La sortie du registre R1 est reliée à la première entrée d'un comparateur numérique CN1 dont la seconde entrée est reliée à la sortie d'une mémoire M1 contenant un indicatif codé en binaire sur un octet et correspondant au début du fichier transmis par la base de données 1. La sortie du comparateur CN1 est reliée, d'une part, à la seconde entrée de la porte P1 et, d'autre part, à une entrée de commande du circuit logique CL2. Dés la reconnaissance de l'indicatif emmagasiné dans la mémoire M1 dans le flot de données transmis par le circuit CL1, le comparateur CN1 émet un signal qui débloque le circuit CL2 et rend passante la porte P1. Le registre R1 est relié au BUS par une liaison 37 qui permet de transmettre un ordre de remise à zéro. La mémoire M1 est reliée au BUS par une liaison 38 qui permet, à partir du processeur 13, de modifier éventuellement son contenu.

La sortie du circuit logique CL2 est reliée à une entrée d'un additionneur (modulo-2) CEX dont la sortie est reliée à l'entrée d'une mémoire MG. La sortie du compteur C1 est reliée à un registre d'octets R2 qui contient donc le nombre d'octets transmis par CL2 à la mémoire MG. Le registre R2 a son entrée de remise à zéro reliée au BUS par une liaison 39 et sa sortie reliée à la première entrée d'un comparateur numérique CN2. La seconde entrée du comparateur CN2 est reliée à la sortie d'un circuit logique CL3 qui contient le nombre d'octets utiles maximal contenus dans un groupe de données. Le circuit CL3 calcule le nombre d'octets du groupe à partir des informations TMG ou «taille maximale des groupes» et TMB ou «taille maximale des blocs de données» transmises respectivement à partir du BUS par les liaisons 40 et 41, respectivement. La sortie du comparateur CN2 est reliée, d'une part, à une entrée de commande d'arrêt du circuit logique CL2 et, d'autre part, à une entrée d'un circuit logique CL5 dont une autre entrée est reliée à la sortie du registre R2. Lorsque le contenu de $R_2$ correspond à celui du circuit logique CL3, le comparateur CN2 bloque le circuit CL2, interdisant l'entrée des données dans la mémoire MG.

La mémoire MG comprend deux parties, l'une EG dans laquelle sont enregistrés les octets de l'en-tête de groupe et l'autre GD dans laquelle sont enregistrés les octets des données provenant de la source de données par les circuits CL1 et CL2. La partie de mémoire EG comporte six entrées E11 à E16.

L'entrée E11 est reliée à la sortie d'une mémoire M2 qui contient un octet TG, dit de «Type de groupe de données». La mémoire M2 est reliée au Bus par une liaison 42, qui permet à partir du processeur de modifier son contenu.

L'octet TG précise la catégorie de traitement particulière que doit effectuer le récepteur de données. Dans l'application décrite, on distingue 4 types de groupes de données. Des premiers groupes de données engendrés par le processeur central 13 sont relatifs aux informations heure et date en temps réel. Ce sont les groupes horodates. Des seconds groupes de données engendrés aussi par le processeur central 13 sont relatifs aux informations de messagerie d'accès permettant le chiffrement des informations contenues dans les fichiers. Des troisièmes et quatrièmes groupes de données concernent des données de fichiers chiffrés ou non. L'information fournit par l'octet TG permet de définir sur la même voie numérique des groupes de nature différente qui vont être aiguillés au niveau du récepteur vers des organes de traitement spécialisés (organe de traitement de l'heure et de la date, organe de traitement des informations de messageries, organe de traitement des informations fichiers). Dans l'exemple décrit, les données transmises par la source 1 et mises en mémoire dans la mémoire MG sont supposées par la source 1 et mises en mémoire dans la mémoire MG sont supposées être chiffrées. Le circuit OU-exclusif CEX est prévu à cet effet, sa seconde entrée étant reliée à un générateur d'octets chiffrants GOC. La procédure de chiffrement sort du cadre de la présente invention et est, par exemple, décrite dans la demande de brevet intitulée «Système de transmission d'information entre un centre d'émission et des postes récepteurs; ce système étant muni d'un moyen de contrôle de l'accès de l'information transmise» et déposée le 6 février 1979 par l'Etat français et Télédiffusion de France sous le numéro d'enregistrement national 79 02995.

L'entrée E12 est reliée à la sortie d'un compteur C2 dont le contenu est un octet C ou «octet d'indice de continuité du groupe de données». L'octet C permet le séquencement des groupes de données d'un même type TG. L'indice de continuité varie de 0 à 15 et est incrémenté d'une unité (modulo 16) à chaque transmission d'un groupe de données de même type TG. L'entrée de signal du compteur C2 est reliée au BUS par la liaison 44, qui transmet un signal PAG à chaque ordre d'émission d'un groupe par le processeur 13.

A chaque ordre d'émission d'un groupe PAG, transmis par la liaison 44 au compteur C2, le compteur C2 est incrémenté. Comme la sortie du compteur C2 est reliée à l'entrée E12, celle-ci reçoit le numéro de groupe, c'est à dire l'octet C.

Un compteur CR3 a sa sortie reliée à la première entrée d'un comparateur CN3 et son entrée de signal reliée à la liaison 44. La seconde entrée du comparateur CN3 est reliée à la sortie d'une mémoire M3 tandis que sa sortie est reliée à l'entrée de commande d'un circuit logique CL4, ainsi qu'à l'entrée de remise à zéro du compteur CR3. Lorsque le contenu de compteur CR3 est le même que celui de M3, le comparateur CN3 émet un signal qui bloque le circuit logique CL4 et remet à zéro le compteur CR3. La mémoire M3 est reliée au BUS par la liaison 45 qui permet d'en modifier le contenu.

La liaison 44 est également reliée à l'entrée de signal d'un compteur-décompteur C3 dont l'entrée d'initialisation est reliée à la sortie de la mémoire M3 et dont l'entrée de commande d'initialisation est reliée à la sortie du comparateur CN3. A chaque transmission d'un groupe répété, le contenu du décompteur C3 est décrémenté et constitue «l'indice de répétition du groupe de données» ou octet R. La sortie du compteur-décompteur C3 est reliée à l'entrée E13 de la partie EG de la mémoire MG.

En pratique, l'indice de répétition R précise le nombre de retransmissions du groupe de données qui restent à effectuer. En utilisant cet indice, il devient possible de répéter certaines informations sensibles aux erreurs de transmission. Par exemple dans l'application décrite, les informations de la messagerie d'accès sont transmises dans un groupe qui est répété 2 fois, c'est à dire transmis 3 fois. Cela permet de protéger l'information de messagerie contre toute erreur de transmission qui risquerait d'occasionner la perte du fichier de données devenu indéchiffrable. L'octet R permet donc d'ajuster les caractéristiques de transmission au niveau transport en fonction de la qualité désirée de la transmission, exprimée en taux d'erreur résiduel, de la sensibilité de certaines informations utiles et des conditions de propagation du signal.

L'entrée E14 est reliée à la sortie S1 du circuit CL5 dont une entrée E1 est reliée à la sortie du registre R2 et l'autre entrée E2 à la sortie du comparateur CN2. A partir des informations fournies par R2 et CN2, le circuit logique CL5 délivre sur sa sortie S1, un signal, formé de deux octets T1 et T2, qui indique la «taille du groupe de données». Le signal T1, T2 précise le nombre de blocs de données qui s'échelonnent de 0 à 255. Cette information permet donc de tailler sur mesure le longueur des groupes de données en fonction de la nature des données à transmettre. Par exemple dans l'application décrite, les groupes horodate ont une valeur de T1 et T2 égale à 0, car l'en-tête de groupe et l'information utile d'heure et de date n'occupent qu'un seul paquet. Par contre, les groupes d'informations des fichiers ont une taille maximale de 11 blocs de données.

L'entrée E15 est reliée à la sortie S2 du circuit CL5 qui délivre un signal, formé de deux octets F1 et F2, qui définit la «taille du dernier bloc du groupe de données», c'est à dire le nombre d'octets d'information contenu dans le dernier bloc de données du groupe de données. Par exemple, le champ des données utiles dans une information de messagerie est de 46 octets, ce qui entraîne que le groupe correspondant sera constitué par deux blocs de données, soit une taille de groupe T1, T2 égale à 1. Compte tenu de la longueur maximale des blocs de données (30 octets) et de l'en-tête de groupe formée de 8 octets, le deuxième bloc transmis n'est pas plein. La taille du dernier et second bloc exprimée par F1, F2 est donc de 24 octets.

L'entrée E16 est reliée à la sortie d'une mémoire M4 qui contient l'octet N ou information de «Routage du groupe de données». L'octet N, qui est géré par le radiodiffuseur, précise l'acheminement du groupe de données dans le réseau de radiodiffusion. Il peut prendre une valeur de 0 à 15 et permet de gérer des fonctions comme celles du passage dans les centres de temporisation qui tiennent compte des fuseaux horaires. En pratique, cette information n'est pas utilisée au niveau du récepteur de données. Dans le cas de l'application décrite, l'octet de routage ne sera pas exploité.

L'entrée E3 du circuit CL5 est reliée au BUS par une liaison 46 qui permet au circuit CL5 de recevoir du microprocesseur 13 l'information de taille maximale du paquet.

L'entrée de données du circuit logique CL4 est reliée à la sortie de lecture de la mémoire MG et sa sortie est reliée à une jonction J2, semblable à la jonction J1, comportant huit fils 25 de transmission parallèle d'octets, un fil PAR et un fil DOP.

Dès réception d'un signal PAG d'émission d'un groupe, sur la liaison 44, simultanément avec un signal de remise à zéro sur la liaison 43, le compteur CR3 est remis à zéro, donc la sortie du comparateur CN3 passe au niveau haut, ce qui déclenche le fonctionnement du circuit logique CL4. Le contenu de la mémoire MG est alors lu par le circuit logique CL4 qui les transmet sur la jonction J2, suivant le protocole connue résultant des signaux PAR et DOP. Au bout du nombre de répétition désirée du groupe, le compteur CR3 atteint le compte en mémoire dans la mémoire M3, ce qui fait passer la sortie du comparateur CN3 au niveau bas ce qui bloque le circuit CL4. Après la dernière répétition du groupe, le processeur 13 transmet par les liaisons 37 et 39 des signaux de remise à zéro des registres R1 et R2, puis par 36 transmet un ordre de fonctionnement au circuit logique CL1 ce qui permet la formation d'un nouveau groupe dans la mémoire MG.

Dans le circuit générateur de paquets 18, la jonction J2 est reliée à l'entrée d'un circuit logique CL6, Fig. 4, dont la sortie est reliée à l'entrée d'écriture d'une mémoire tampon MP pouvant contenir un paquet de données. Par le fil 26, le circuit CL6 est relié au BUS qui lui transmet un ordre de marche issu du processeur central 13. Le fil DOP de la jonction J2, qui transmet un changement d'état pour chaque octet transmis par le circuit logique CL4, est relié à l'entrée d'un compteur d'octets C4 dont la sortie est reliée à l'entrée d'un registre R4 qui contient le nombre d'octets transmis par zéro RAZ reliée au BUS, par un fil 27 et une sortie reliée à la première entrée d'un comparateur numérique CN4.

La mémoire tampon MP comprend trois parties EP, BD et S. La première partie EP est prévue pour enregistrer les octets de l'en-tête de paquet. La deuxième partie BD est prévue pour enregistrer des octets de données provenant du circuit logique CL6. La troisième partie S est prévue pour enregistrer des octets de suffixe de paquet, qui seront définis dans la suite.

La partie EP comporte six entrées E21 à E26. La première entrée E21 est reliée à la sortie d'une mémoire M5 qui contient le signal R de synchronisation élément binaire, soit deux octets R1 et R2, et le signal de synchronisation octet, soit un octet B. La mémoire M5 est reliée au BUS par une liaison 28.

La deuxième entrée E22 est reliée à la sortie d'une mémoire M6 qui contient trois octets codés Hamming A1, A2 et A3 constituant l'adresse de paquet. La mémoire M6 est reliée au BUS par une liaison 29.

La troisième entrée E23 est reliée à la sortie d'un compteur de paquets C5 dont l'entrée est reliée à une liaison 34 et qui délivre un octet IC représentant le numéro codé Hamming du paquet, c'est à dire l'octet d'indice de continuité. Cet indice varie de 0 à 15 et est incrémenté d'une unité à chaque transmission d'un paquet de données sur une même voie numérique.

La quatrième entrée E24 est reliée à la sortie d'une bascule B1 dont les entrées de signal et de remise à zéro sont reliées au BUS par des liaisons 30 et 31. La bascule B1 est mise à l'état 1 lorsque le bloc contient l'en-tête de groupe de données et à 0 dans les autres cas.

La cinquième entrée E25 est reliée à la sortie d'une bascule B2 dont l'entrée de signal est reliée à la sortie d'un comparateur CN4. La première entrée du comparateur CN4 est reliée à la sortie du registre R4 contenant le nombre d'octets transmis par CL6 et sa seconde entrée est reliée à sortie d'une mémoire M7 qui contient le nombre maximal des octets de données pouvant être contenus dans un bloc de données, soit trente dans l'exemple décrit. L'entrée de remise à zéro de la bascule B2 est reliée au BUS par une liaison 32.

La sixième entrée E26 est reliée à la sortie d'une mémoire M8 dont l'entrée est reliée au BUS par la liaison 33 et qui contient la taille du suffixe placé en fin de paquet.

En fait, les entrées E24, E25 et E26 reçoivent les informations SP relatives à l'octet dit de structure du paquet. Cet octet, codé Hamming, permet de faire la distinction entre un paquet synchronisant, correspondant au début d'un groupe de données, et un paquet standard. Il permet également de savoir si le paquet est plein ou non d'octets d'information. Enfin, il définit la taille du suffixe utilisé pour la détection et/ou la correction des erreurs dans le bloc de données. Le tableau suivant donne la signification de chacun des quatre éléments binaires de l'octet SP.

| Eléments binaires b8 b6 b4 b2 | | | | Signification |
|---|---|---|---|---|
| | | 0 | | Paquet standard |
| | | 1 | | Paquet synchronisant |
| | 0 | | | Paquet plein d'octets d'information |
| | 1 | | | Paquet non plein d'octets d'information |
| 0 | 0 | | | Aucun suffixe |
| 0 | 1 | | | Suffixe 1 octet |
| 1 | 0 | | | Suffice 2 octets |
| 1 | 1 | | | Suffixe 3 octets |

La seconde entrée du comparateur CN4 est reliée à la sortie d'une mémoire M7 qui contient le nombre maximum d'octets utiles d'un paquet et dont une entrée est reliée au BUS par la liaison 46. La sortie du comparateur CN4 est encore reliée à une entrée de commande de CL6 qui interdit le fonctionnement de CL6, donc de CL4, quand le nombre d'octets inscrit dans R4 correspond au contenu de la mémoire M7. Si l'on fait l'hypothèse que le paquet est plein, ce signal provoque également la génération des octets de suffixe. Ce suffixe est calculé par le circuit logique CSU dont l'entrée d'activation est reliée à la sortie du comparateur CN4 et dont la sortie est reliée à l'entrée de la partie S de la mémoire MP. Dans le cas de la présente invention, le suffixe est toujours placé à la fin du paquet de données: le nombre d'octets du suffixe, précisé par les éléments binaires b8 et b6 de l'octet de structure de paquet, diminue d'autant le nombre d'octets du bloc de données; dans l'application considérée, le suffixe a une taille de 2 octets et les blocs de données peuvent contenir jusqu'à 30 octets.

Le coupleur d'entrée 12 comprend encore un simulateur d'émission qui simule les vidages de la mémoire tampon MP, de façon à éviter que les paquets ne soient diffusés à une cadence trop rapide pour pouvoir être traités dans les équipements de réception. Un tel simulateur est décrit dans le brevet 2 313 825 mentionné plus haut.

La sortie de la mémoire MP est reliée à un circuit logique d'émission CL7 dont l'entrée d'horloge est reliée à la sortie d'une horloge H dont l'entrée d'initialisation M est reliée au BUS et qui fournit le signal de fréquence élément binaire FB, dont l'entrée de commande est reliée au BUS par la liaison 34 qui transmet un ordre OEP issu du processeur central 13 et dont la sortie est reliée au BUS par la liaison 34. La liaison 34 est également reliée à l'entrée du compteur C5 qui compte les paquets émis sur l'ordre OEP du processeur central 13 par le coupleur d'entrée 12 vers le multiplexeur 14. La liaison 35 transmet le paquet issu de la mémoire MP octet par octet vers le multiplexeur 14.

Le multiplexeur 14 émet, élément binaire par élément binaire, le paquet vers le modulateur 10 qui est chargé de mettre en forme les données. Le modulateur 12 est, de préférence, identique à celui qui est décrit dans le brevet 2 313 825, déjà mentionné.

Après insertion des données dans le signal vidéo, les informations numériques sont diffusées par le réseau de télédiffusion hertzienne 4. L'information diffusée est reçue par une pluralité de récepteurs 5 de données comportant chacun une antenne de réception 6, un sous-ensemble de démodulation 7, un dispositif d'acquisition de données 8 et un périphérique de dialogue 9.

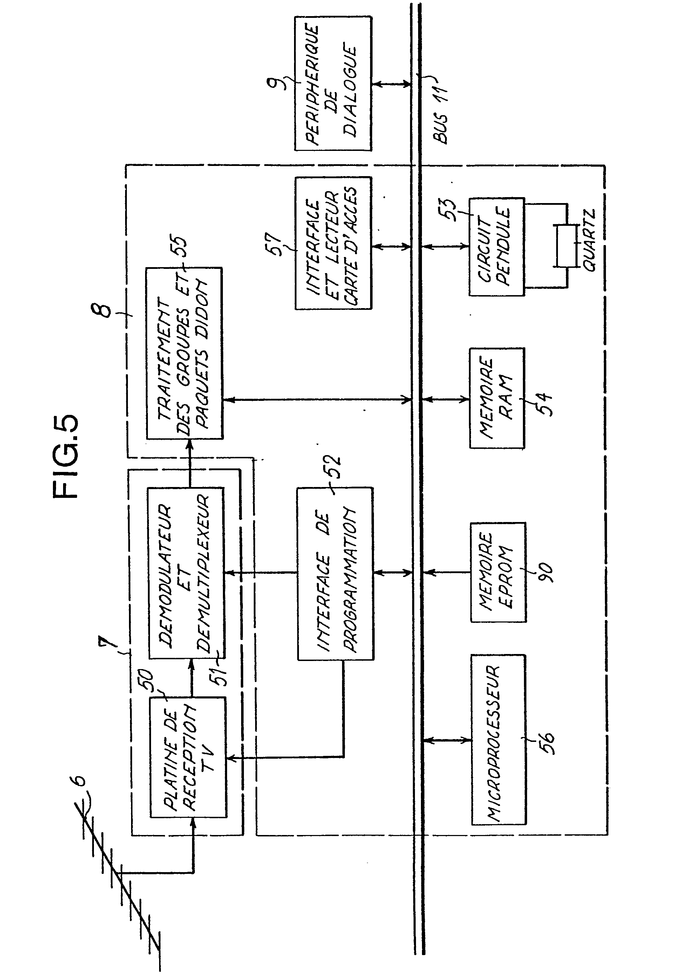

Dans l'application considérée, les buts assignés à l'équipement de réception sont le faire l'acquisition des fichiers de données et d'en permettre la consultation par un organe périphérique. La Fig. 5 illustre la structure fonctionnelle des récepteurs de données 5 qui comportent les sous-ensembles suivants:

— un antenne 6,
— une platine de réception TV 50,
— un sous-ensemble DIDON 51 comprenant un démodulateur et un démultiplexeur, 50 et 51 formant le sous-ensemble 7,
— un interface de programmation de la platine de réception TV et du démultiplexeur DIDON 52,
— un circuit pendule 53 permettant les contrôles de validité des fichiers,
— une mémoire de masse 54 dimensionnée pour contenir l'ensemble des fichiers transmis,
— un sous-ensemble de traitement et de gestion des paquets DIDON et des groupes de données 55,
— un microprocesseur 56,
— une mémoire de programme EPROM 90, qui contient le logiciel du microprocesseur 56,

– un interface à la carte d'accès autorisant le déchiffrement des données 57,

– un périphérique de dialogue 9 permettant la consultation des fichiers résidents dans la mémoire du récepteur et

– un bus également simplement appelé BUS.

La platine de réception 50, accordée sur le canal TV à recevoir, fournit en sortie un signal vidéo dont certaines lignes transportent des informations numériques. Ce signal entre dans un sous-ensemble DIDON 51 qui effectue les traitements suivants:

– démodulation du signal numérique, c'est à dire extraction de toutes les données numériques insérées dans le signal vidéo,

– démultiplexage des données, c'est à dire tri des données correspondant à la voie numérique sélectionnée définie par l'adresse de paquet $A_1$, $A_2$, $A_3$. Le démultiplexeur fournit en sortie l'octet d'indice de continuité IC du paquet, l'octet de structure de paquet SP, le bloc de données et le suffixe S.

La description de la platine de réception est bien connue de l'homme de l'art. Quant au fonctionnement des circuits de démodulation et de démultiplexage DIDON, i a déjà été décrit dans le brevet français 2 313 825, déjà cité. Dans la suite, on considérera donc plus particulièrement la structure et le fonctionnement du circuit de traitement et de gestion des paquets et des groupes de données, objets de la présente invention. Ce sous-ensemble 55 comprend deux parties fonctionnelles:

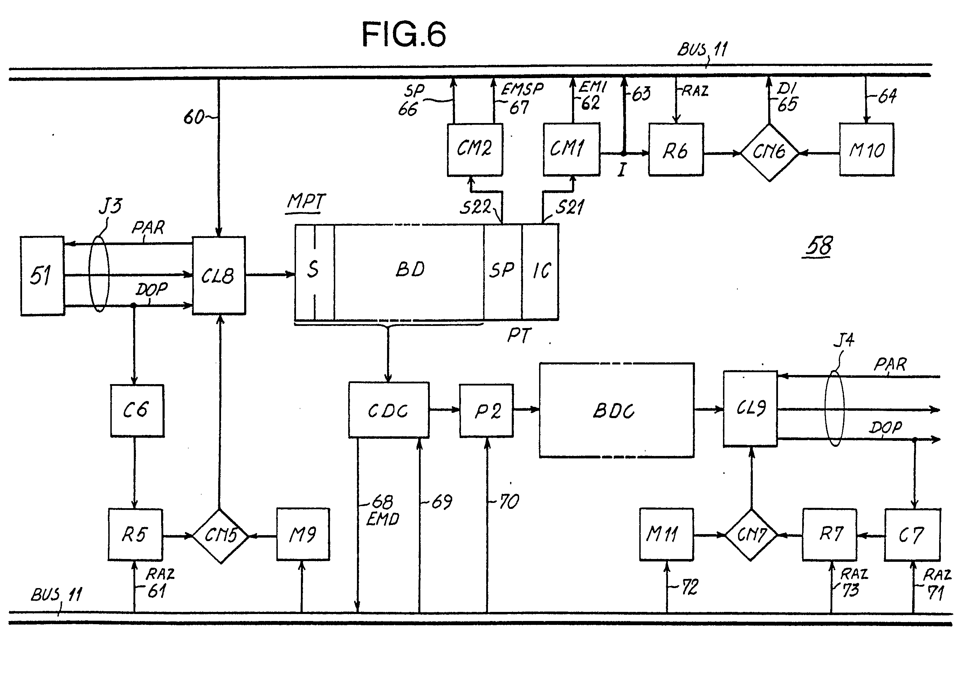

– l'une 58, Fig. 6, effectuant le traitement des paquets de données,

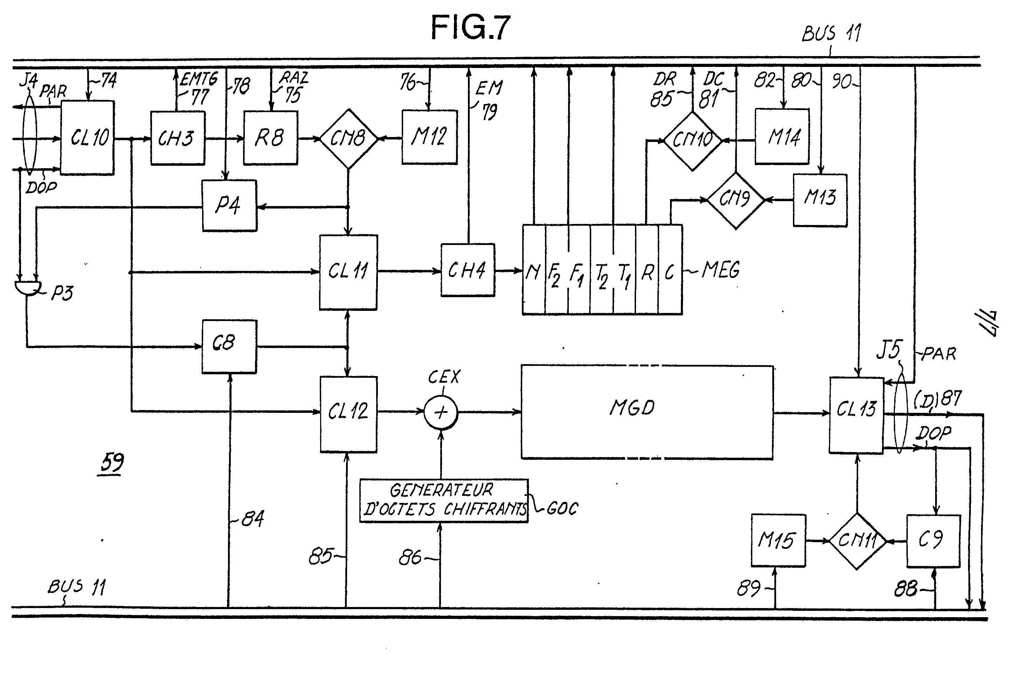

– l'autre 59, Fig. 7, effectuant le traitement et la gestion des groupes de données.

Les données fournies par le circuit de démultiplexage sont transmises par une jonction numérique J3 au circuit logique CL8, Fig. 6, dont l'entrée de commande est reliée au BUS par une liaison 60. La sortie du circuit CL8 est reliée à une mémoire MPT pouvant contenir un paquet de données, à l'exclusion des octets de synchronisation élément binaire et octet et des trois octets d'adresse de paquet, soit une taille mémoire de 34 octets dans l'application considérée. Le fil DOP de la jonction numérique J3 est reliée à l'entrée d'un compteur d'octets C6 dont la sortie est reliée à l'entrée d'un registre d'octets R5 dont l'entrée de remise à zéro est reliée au BUS par la liaison 61, ce qui permet de le réinitialiser, à chaque paquet de données reçu, par un ordre émis par le microprocesseur et transmis par le BUS. La sortie du registre R5 est reliée à la première entrée d'un comparateur numérique CN5, dont la seconde entrée est reliée à la sortie d'une mémoire M9 contenant la taille maximale des paquets de données soit ici 34 octets. La sortie du comparateur CN5 est reliée à l'entrée d'inhibition du fonctionnement du circuit CL8. Lorsqu'il y a concordance entre le contenu de M9 et celui de R5, le signal de sortie du circuit CN5 bloque le circuit CL8, ce qui arrête le remplissage de la mémoire MPT. Par la liaison 60, le microprocesseur 56 peut réactiver le fonctionnement du circuit CL8.

La mémoire MPT comprend trois parties PT, BD et S. Dans la première partie PT, sont enregistrés les deux octets d'indice de continuité IC et de structure de paquet SP. Dans la deuxième partie BD, sont enregistrés les octets du bloc de données BD. Dans la troisième partie S, sont enregistrés les deux octets de suffixe S. La partie PT a une première sortie S21 reliée à un circuit de correction Hamming CM1 auquel est ainsi transmis l'octet d'indice de continuité IC. Le circuit CM1 fournit, en fonction de l'octet IC reçu, sur sa première sortie les 4 éléments binaires d'information d'indice I et, sur une seconde sortie, un signal EMI indiquant des erreurs multiples sur l'indice. La première sortie I de CM1 est relié à l'entrée d'un registre R6 qui enregistre donc les 4 bits utiles de l'indice. La sortie du registre R6 est reliée à la première entrée d'un comparateur CN6, dont la seconde entrée est reliée à une mémoire M10 contenant l'indice de continuité de paquet attendu. La seconde sortie EMI de CM1 est reliée au BUS par une liaison 62. La sortie I est également reliée au BUS par une liaison 63. L'entrée de la mémoire M10 est reliée au BUS par une liaison 64. Le contenu de la mémoire M10 est calculé par le microprocesseur 56 et transmis par le BUS et 64. La sortie du comparateur CN6 est reliée au BUS par la liaison 65. S'il n'y a pas coïncidence entre le contenu du registre R6 et celui de la mémoire M10, le comparateur CN6 fournit au microprocesseur, par l'intermédiaire de 65 et du BUS, un signal DI indiquant une discontinuité d'indice de paquet. Ce signal d'alarme est utilisé par le microprocesseur 56 pour la gestion des groupes de données.

La partie PT de la mémoire a une deuxième sortie S22 reliée à un deuxième circuit correcteur de Hamming CM2 qui fournit, sur une première sortie, les 4 éléments binaires utiles de l'octet de structure de paquet SP et, sur une seconde sortie, un signal EMSP indiquant la présence d'erreurs multiples dans l'octet SP. La première sortie du circuit CM2 est reliée au BUS par la liaison 66 et la seconde par la liaison 67. L'information SP transmise, vis 66 et le bus, au microprocesseur 56 contient, notamment, l'élément binaire b2 qui indique s'il s'agit ou non d'un paquet synchronisant.

La sortie de lecture des parties BD et S de la mémoire MPT est reliée à l'entrée d'un circuit CDC capable de détecter et de corriger des erreurs dans le bloc de données. Une sortie de commande du circuit CDC est reliée au BUS par une liaison 68 et sa sortie de données est reliée à une entrée d'une porte ET P2. Une entrée de commande du circuit CDC est reliée au BUS par une liaison 69. L'autre entrée de la porte ET P2 est reliée au bus par une liaison 70. La sortie de la porte ET P2 est reliée à l'entrée d'une mémoire de bloc BDC.

Tant qu'un paquet du type synchronisant, avec b2=1, n'est pas trouvé dans le flot des paquets transmis par CL8, lemicroprocesseur ne reçoit pas l'information par 66 et ne débloque pas la porte P2 par 70, ce qui interdit le remplissage de le mémoire BDC et assure que le premier bloc transmis à BDC est un bloc correspondant à un paquet synchronisant.

Par ailleurs, les octets enregistrés dans la deuxième partie BD et la troisième partie S de la mémoire MPT sont lus et traités par le circuit CDC. L'information EMD d'erreurs multiples dans le bloc de données est transmise par 68 et utilisée par le microprocesseur 56 pour le traitement des groupes de données. Après correction éventuelle des erreurs par CDC, les octets du bloc de données sont enregistrés dans la mémoire de bloc BDC.

La mémoire BDC est dimensionnée pour contenir un bloc de données, soit 30 octets dans l'exemple décrit. Par la liaison 69, le circuit CDC reçoit un signal issu du microprocesseur 56 et indiquant la taille des blocs de données qui doivent être transférés dans la mémoire BDC.

La sortie de la mémoire BDC est reliée à l'entrée d'un circuit logique CL9 dont la sortie est reliée à une jonction J4. Dès que la mémoire BDC est remplie, le circuit logique CL9 procède au transfert des données octet par octet, par la jonction J4, vers le sous-ensemble de traitement des groupes de données. Les échanges se font grâce aux signaux PAR et DOP. Le fil DOP de la jonction J4 est reliè à l'entrée d'un compteur C7 dont l'entrée de remise à zéro est reliée au BUS par une liaison 71 et dont la sortie est reliée à l'entrée d'un registre R7. A chaque émission d'un octet, le compteur C7 est incrémenté et son contenu est transmis au registre d'octet R7. La sortie du registre R7 est reliée à la première entrée d'un comparateur numérique CN7, dont la seconde entrée est reliée à la sortie d'une mémoire M11 contenant la taille des blocs de données. L'entrée de la mémoire M11 est reliée au BUS par une liaison 72. L'entrée de remise à zéro du registre R7 est reliée au BUS par une liaison 73. La sortie du comparateur CN7 est reliée à l'entrée d'inhibition du circuit CL9.

Dès qu'il y a coïncidence entre les contenus de M11 et R7, le comparateur CN7 envoie un signal qui bloque le circuit CL9, interdisant le transfert des données par J4 vers le sous-ensemble de traitement des groupes.

La jonction J4 est reliée à un circuit logique CL10 de la partie fonctionnelle 59, Fig. 7. Le circuit CL10 est relié au BUS par une liaison 74, par laquelle le microprocesseur 56 peut lui transmettre un ordre d'activation. La sortie du circuit CL10 est reliée à l'entrée d'un circuit correcteur de Hamming CH3, à l'entrée d'un circuit logique CL11 et à l'entrée d'un circuit logique CL12. Une sortie du circuit logique CH3 est reliée à l'entrée d'un registre R8 à laquelle elle transmet les 4 éléments binaires utiles b2, b4, b6 et b8 du premier octet du premier bloc de données. La sortie du registre R8 est reliée à la première entrée d'un comparateur numérique CN8 dont la seconde entrée est reliée à la sortie d'une mémoire M12 contenant l'information de type de groupe TG. L'entrée de remise à zéro du registre RB est reliée au BUS par une liaison 75 et l'entrée de la mémoire M12 est reliée au BUS par une liaison 76. Une seconde sortie du circuit CH3 est reliée au BUS par une liaison 77. La sortie du comparateur CN8 est reliée à l'entrée d'activation du circuit logique CL11 et à une entrée d'une porte ET P4. La sortie de la porte P4 est reliée à une entrée d'une porte ET P3 dont l'autre entrée est reliée au fil DOP de la jonction J4 et dont la sortie est reliée à l'entrée d'inhibition du circuit logique CL11 et, d'autre part, à l'entrée d'activation du circuit logique CL12.

On suppose que le groupe transporte des données d'un fichier chiffré. Dès reconnaissance du type de groupe TG attendu, le comparateur CN8 émet un signal qui débloque le circuit logique CL11. Le circuit CL11 reçoit donc les données fournies par CL10 à partir du $2^e$ octet du $1^{er}$ bloc de données.

La seconde entrée de la porte P4 est reliée au BUS par une liaison 78 qui est normalement activée. Quand la sortie de CN8 passe au niveau haut, la sortie de la porte P4 active une entrée de la porte P3 qui laisse donc passer les signaux DOP de la jonction J4.

La sortie de la porte P3 étant reliée au compteur d'octets C8, lorsque ce compteur atteint la valeur «9», il bloque le circuit CL11. Le circuit logique CL11 reçoit donc les octets 2 à 8 de l'en-tête de groupe contenu dans le $1^{er}$ bloc de données. La sortie de CL11 est relié à un circuit correcteur de Hamming CH4 dont la sortie est reliée à l'entrée d'une mémoire MEG. Le circuit CH4 fournit en sortie les éléments binaires d'information utiles à la mémoire MEG. Une seconde sortie du circuit CH4 est reliée au BUS par une liaison 79, pour pouvoir signaler au microprocesseur 56 les erreurs multiples EM affectant chacun des octets de l'en-tête de groupe. La première information enregistrée dans la mémoire MEG est l'indice de continuité du groupe C. La mémoire MEG comporte cinq sorties S31 à S35 lesquelles délivrent les informations C, R, T1 et T2, F1 et F2, et N. La sortie S31 est reliée à l'entrée d'un comparateur numérique CN9 dont la seconde entrée est reliée à la sortie d'une mémoire M13 qui contient l'indice de continuité attendu. L'entrée de la mémoire M13 est reliée au BUS par une liaison 80 et la sortie du comparateur CN9 est reliée au BUS par une liaison 81. La valeur de l'indice C reçu dans MEG est comparée au contenu de la mémoire M13 qui contient l'indice de continuité de groupe attendu. S'il n'y a pas coïncidence, le comparateur CN9 signale par 81 au microprocesseur une discontinuité d'indice.

La deuxième sortie S32 de la mémoire MEG est reliée à une entrée d'un comparateur numérique CN10 dont la seconde entrée est reliée à la sortie d'une mémoire M14 dont l'entrée est reliée au BUS par une liaison 82. La sortie du comparateur CN10 est reliée au BUS par une liaison 83. L'information délivrée par S32 est l'indice de répétition du groupe R. Le circuit CN10 compare la valeur de R à celle enregistrée dans M14. S'il n'y a pas coïncidence, le comparateur CN10 signale au microprocesseur une discontinuité de progression de l'indice de répétition.

Le compteur C8 libère également le circuit logique CL12 lorsqu'il atteint la valeur 9, ce qui autorise le transfert par CL12 des données des blocs de données, à l'exclusion les données de l'en-tête de groupe. L'entrée de remise à zéro du compteur C8 est reliée au BUS par une liaison 84 et l'entrée d'inhibition du circuit logique CL12 est reliée au BUS par une liaison 85. La sortie du circuit CL12 est reliée à une entrée d'une porte OU exclusif dont la seconde entrée est reliée à la sortie d'un générateur d'octets chiffrant GOC dont l'entrée est reliée au BUS par une liaison 86. La sortie de la porte OU-exclusif CEX est reliée à l'entrée d'une mémoire MGD.

Comme les données sont supposées chiffrées, les informations fournies par CL12 passent par un circuit «OU exclusif» CEX relié au générateur GOC et le circuit OU-exclusif effectue le déchiffrement des données. Après déchiffrement, les données en clair viennent remplir la mémoire MGD. Le remplissage est arrêté grâce à un signal émis par le microprocesseur, via le BUS et la liaison 85, et qui vient bloquer le circuit CL12. Ce signal est engendré par le microprocesseur à partir de l'exploitation des informations enregistrées dans la mémoire MEG, à savoir «taille de groupe» et «taille du dernier bloc de données». En cas de répétition du groupe de données, si les blocs précédemment enregistrés sont réputés être affectés d'erreur non corrigeables, les emplacement mémoire correspondant voient leur contenu être substitué par les données du bloc répété, et ceci à la condition que ce dernier ne soient pas affecté d'erreurs non corrigeables. Ce traitement est effectué de proche en proche jusqu'à épuisement des blocs répétés.

La sortie de la mémoire MGD est reliée à l'entrée d'un circuit logique CL13 dont la sortie est reliée à une jonction J5 dont les fils PAR, DOP et les fils de transmission de données 87 sont reliés au BUS. De plus, le fil DOP est relié à l'entrée d'un compteur C9 dont l'entrée de remise à zéro est reliée au BUS par une liaison 88. La sortie du compteur C9 est reliée à la première entrée d'un comparateur CN11 dont la seconde entrée est reliée à la sortie d'une mémoire M15 dont l'entrée est reliée au Bus par une liaison 89. La mémoire M15 contient la taille du groupe de données. La sortie du comparateur CN11 est reliée à l'entrée d'inhibition du circuit CL13. L'entrée d'activation du circuit CL13 est reliée au BUS par une liaison 90.

Lorsque le remplissage de la mémoire des données de groupe MGD est terminé, le microprocesseur 56 procède au transfert des données via le circuit CL13, 87 et le BUS, dans la mémoire RAM du récepteur. En fin de transmission, cette mémoire contient donc l'ensemble des fichiers émis par la base de données, ce qui autorise leur consultation par le périphérique de dialogue.

Il doit être bien entendu que le système qui vient d'être décrit à titre d'exemple d'application, peut faire l'objet de variantes sans sortir du cadre de l'invention.

Enfin, le système peut être utilisé avec tout support unidirectionnel permettant de transmettre un signal normalise de télévision, tel qu'un réseau de télédistribution par câbles, par exemple, au lieu d'une voie de diffusion herzienne.

Le système, objet de la présente invention, peut également être utilisé sur tout rapport unidirectionnel conçu pour transmettre des paquets de données, indépendamment de la structure temporelle fournie par les signaux de synchronisation du signal de télévision, par exemple sur une porteuse modulée pour fournir un flux numérique.

**Revendications**

1. Système de diffusion de données numériques arrangées sous forme de paquets, les données numériques provenant éventuellement de plusieurs voies, chaque paquet comportant un préfixe contenant, outre des signaux de synchronisation classiques (R1, R2, B) et de code d'identification de voie (A1, A2, A3), un signal d'indice de continuité de paquet (IC) et une information sur la structure du paquet, caractérisé en ce que, chaque voie pouvant correspondre à une pluralité de sources, les données à émettre par chaque source sont arrangées en groupes de données, chaque groupe étant formé d'une série de blocs de données, chaque bloc de données formant le champ de données d'un paquet, les blocs d'un groupe d'une voie n'étant pas multiplexés avec les blocs d'un autre groupe de la même voie, le premier bloc de chaque groupe comportant un en-tête de groupe formé d'octets définissant le type de groupe (TG), l'indice de continuité de groupe (C), le nombre de blocs du groupe qui suivent le premier bloc (T1, T2) et la taille du dernier bloc du groupe (F1, F2), chaque bloc sauf le dernier d'un groupe ayant la taille maximale du champ de données du paquet, et le préfixe de chaquet comprenant l'information (B1) indiquant si le bloc du paquet est le premier bloc d'un groupe ou non.

2. Système suivant la revendication 1, caractérisé en ce que l'en-tête du groupe comporte une information de catégorie de traitement (TG) indiquant vers quel circuit de traitement du récepteur le groupe doit être dirigé.

3. Système suivant la revendication 1 ou 2 dans lequel les groupes de données sont répétés, caractérisé en ce que l'en-tête du groupe comporte encore une information (R) indiquant le nombre de fois que le groupe concerné sera encore répété.

4. Système suivant l'une des revendications 1 à 3 dans lequel chaque bloc de données comporte, après les données utiles, un certain nombre d'octets de détection d'erreurs et de correction formant un suffixe, caractérisé en ce que le préfixe de paquet comprend une information (S) indiquant le nombre d'octets formant le suffixe.

**Patentansprüche**

1. System zum Verbreiten von in Paketen angeordneten digitalen Daten, die gegebenenfalls von mehreren Kanälen geliefert werden, wobei jedes Paket ein Prefix aufweist, das neben üblichen Synchronisations-Signalen (R1, R2, B) und Codesignalen (A1, A2, A3) zur Kanalidentifizierung ein Anzeige-Signal (IC) für die Kontinuität des Pakets und eine Information über den Aufbau des Pakets enthält, dadurch gekennzeichnet, dass jeder Kanal gegebenenfalls einer Mehrzahl von Quellen entspricht, dass die von jeder Quelle auszusendenden Daten in Datengruppen angeordnet sind, dass jede Datengruppe durch eine Reihe von Datenblöcken gebildet wird, dass jeder Datenblock das Datenfeld eines Pakets bildet, dass die Blöcke einer Gruppe eines Kanals nicht im Multiplex mit den Blöcken einer anderen Gruppe desselben Kanals stehen, dass der erste Block jeder Gruppe einen Gruppenkopf aufweist, der aus Bytes gebildet ist, die den Typ der Gruppe (TG), die Kontinuitätsanzeige (C) der Gruppe, die Anzahl der Blöcke der Gruppe, die dem ersten Block folgen (T1, T2) und den Umfang des letzten Blocks der Gruppe (F1, F2) bestimmen, dass jeder Block einer Gruppe mit Ausnahme des letzten Blocks den maximalen Umfang des Datenfeldes des Pakets aufweist, und dass das Prefix jedes Pakets die Information B(B1) enthält, die angibt, ob der Block des Pakets der erste Block einer Gruppe ist oder nicht.

2. System nach Anspruch 1, dadurch gekennzeichnet, dass der Gruppenkopf noch eine Information über die Kategorie der Verarbeitung (TG) enthält, die angibt, welcher Verarbeitungsschaltung des Empfängers die Gruppe zugeführt werden soll.

3. System nach Anspruch 1 oder 2, bei dem die Datengruppen wiederholt werden, dadurch gekennzeichnet, dass der Gruppenkopf ferner eine Information (R) enthält, die angibt, wieviele Male die betroffene Gruppe noch wiederholt werden soll.

4. System nach einem der Ansprüche 1 bis 3, in dem jeder Block hinter den Nutzdaten eine bestimmte Anzahl von Bytes zur Fehler-Feststellung und -Korrektur enthält, die ein Suffix bilden, dadurch gekennzeichnet, dass das Prefix jedes Paket eine Information (S) enthält, die die Anzahl der das Suffix bildenden Bytes angibt.

## Claims

1. A digital data broadcasting system, the digital data being arranged in the form of data packets and being possibly delivered from a plurality of channels, each data packet comprising a prefix having a packet continuity index signal (IC) and a packet structure information, in addition to well-known synchronization signals (R1, R2, B) and channel identifying code signals (A1, A2, A3), characterized in that, each channel possibly corresponding to a plurality of sources, the data to be transmitted from each source are arranged in data groups, each data group being constituted by a series of data blocks, each data block forming the data field of a data packet, the data blocks of a data group from a channel being not multiplexed with the data blocks of another data group form the same channel, the first data block of each data group comprising a group header formed with bytes defining the type of the data group (TG), the group continuity index (C), the number of blocks of the data groupe which follow the first data block (T1, T2) and the size of the last data block of the data group (F1, F2), each data block of a data group, the last one excepted, having the maximum size of the data field of the data packet, and the prefix of each data packet including the information (B1) indicating whether or not the data block of the data packet is the first data block of a data group.

2. A system according to claim 1, characterized in that the group header includes a processing category information (TG) indicating what processing circuit of the receiver the header is to be applied to.

3. A system according to claim 1 or 2 wherein the data groups are repeated, characterized in that the group header further includes an information (R) indicating how many times the concerned group will be repeated again.

4. A system according to anyone of claims 1–3 in which each data block comprises, after the useful data, a number of error detection and correction bytes forming a suffix, characterized in that the prefix of each data packet includes an information (S) indicating the number of bytes forming said suffix.

# FIG.1

# FIG.2

# FIG.3

0 077 712

**FIG.4**

# FIG.5

- PLATINE DE RECEPTION TV — 50
- DEMODULATEUR ET DEMULTIPLEXEUR — 51
- TRAITEMENT DES GROUPES ET PAQUETS DIDON — 55
- INTERFACE DE PROGRAMMATION — 52
- INTERFACE ET LECTEUR CARTE D'ACCES — 57
- PERIPHERIQUE DE DIALOGUE — 9
- MICROPROCESSEUR — 56
- MEMOIRE EPROM — 90
- MEMOIRE RAM — 54
- CIRCUIT PENDULE — 53
- QUARTZ
- BUS 11

## FIG.6

58

FIG.7